# EUROPÄISCHE PATENTSCHRIFT

(11) **EP 0 813 803 B1**
(45) Veröffentlichungstag und Bekanntmachung des Hinweises auf die Patenterteilung: **12.08.1998**
(21) Anmeldenummer: 96903877.7
(22) Anmeldetag: 19.02.1996
(51) Int. Cl.: H05K 7/14, G06F 13/40

(54) **STROMSCHIENEN MIT SIEBKONDENSATOREN**
BUS BARS WITH FILTER CONDENSERS
BARRES OMNIBUS A CONDENSATEURS DE FILTRAGE

(30) Priorität: 06.03.1995 DE 19507790
(43) Veröffentlichungstag der Anmeldung: 29.12.1997
(73) Patentinhaber: Siemens Nixdorf Informationssysteme AG, 33106 Paderborn (DE)
(72) Erfinder: RIEKEN, Ralf, D-32805 Horn-Bad Meinberg (DE)
(74) Vertreter: Epping, Wilhelm, Dr.-Ing.
(86) Internationale Anmeldenummer: DE9600250
(87) Internationale Veröffentlichungsnummer: WO9628002

(56) Entgegenhaltungen:
- DE-A- 3 925 554
- GB-A- 2 238 431
- US-A- 4 697 858

## Beschreibung

### Technisches Gebiet

Die Anordnung betrifft die Montage von Siebkondensatoren bei Stromversorgungen mit Stromschienen.

### Stand der Technik

Insbesondere bei Datenverarbeitungsanlagen größerer Leistungsaufnahme wird die Betriebsspannung über Stromschienen einer Rückwand zugeführt. Auf der als Leiterplatte ausgebildeten Rückwand sind Siebkondensatoren angeordnet. Diese nehmen, bedingt durch ihre große Kapazität und dem dadurch bedingten großen Volumen, wertvollen Platz auf der Rückwand ein. Um dieses zu vermeiden, werden bisher Siebkondensatoren an das Chassis geschraubt und mit kurzen zusätzlichen Verbindungsleitungen mit der Rückwand verbunden.

In der deutschen Offenlegungsschrift DE 39 25 554 Al wird eine Rückwand mit Stromschienen gezeigt, bei der Kondensatoren auf der Rückwand angeordnet sind.

Aufgabe der Erfindung ist es, Siebkondensatoren mit geringem Montageaufwand und Platzbedarf anzuordnen.

### Darstellung der Erfindung

Die Erfindung enthält die Erkenntnis, daß bei der Versorgung der Rückwand mit Stromschienen die Isolierschicht zwischen den Stromschienen durch eine Leiterplatte ersetzt werden kann, deren Oberflächen durch die ohnehin vorhandene mechanische Verbindung der Stromschienen untereinander gut mit den Stromschienen kontaktiert wird. Die Leiterplatte überragt die Stromschienen seitlich, d.h. in Querrichtung zu der Laufrichtung der Stromschienen. Auf dem überragenden Teil sind Kondensatoren angeordnet, die mit den Oberflächen verbunden sind. Diese Leiterplatten mit den Siebkondensatoren sind einfach herzustellen und können praktisch ohne zusätzlichen Aufwand montiert werden, da sie anstelle der bislang verwendeten Isolierschicht montiert werden. Die Siebkondensatoren nehmen so weder Platz auf der Rückwand ein, noch müssen sie in einem eigenen Arbeitsgang montiert und verbunden werden. Durch die Anordnung längs der Stromschienen können zudem eine große Anzahl relativ kleiner Siebkondensatoren verwendet werden, was zu einem geringen Serienwiderstand und damit zu einer ausgezeichneten Siebwirkung führt. Durch die Verteilung der Siebkapazität auf einen wesentlichen Teil der Stromschiene wird auch deren Induktivität weniger wirksam, so daß das Netzteil einfacher und stabiler im Betrieb wird.

Ein so ausgebildetes Stromschienenpaket kann auch auf der Rückwand zur Verteilung der Versorgungsspannungen verwendet werden, indem an die Stromschienen Anschlußlaschen an der den Kondensatoren abgewandten Seite angeformt sind, die dann jeweils mit Einspeisungspunkten auf der Rückwand verbunden sind. Diese Verbindung kann durch kurze Kabel, Steck- oder Lötverbindung erfolgen.

Sind zwei Spannungen mit demselben Massepotential zuzuführen, so werden in einer bevorzugten Weiterbildung drei Stromschienen verwendet, wobei die mittlere Stromschiene Massepotential führt und jeweils zwischen die mittlere und eine Randschiene eine Trägerplatte mit Siebkondensatoren angeordnet wird.

### Kurzbeschreibung der Zeichnungen

Es zeigen
- Fig. 1: ein Stromschienenpaket als Schnitt in Laufrichtung der Stromschienen,
- Fig. 2: die Anordnung nach Fig. 1 in seitlicher Sicht,
- Fig. 3: dieselbe Anordnung in Aufsicht.

### Detaillierte Beschreibung der Erfindung

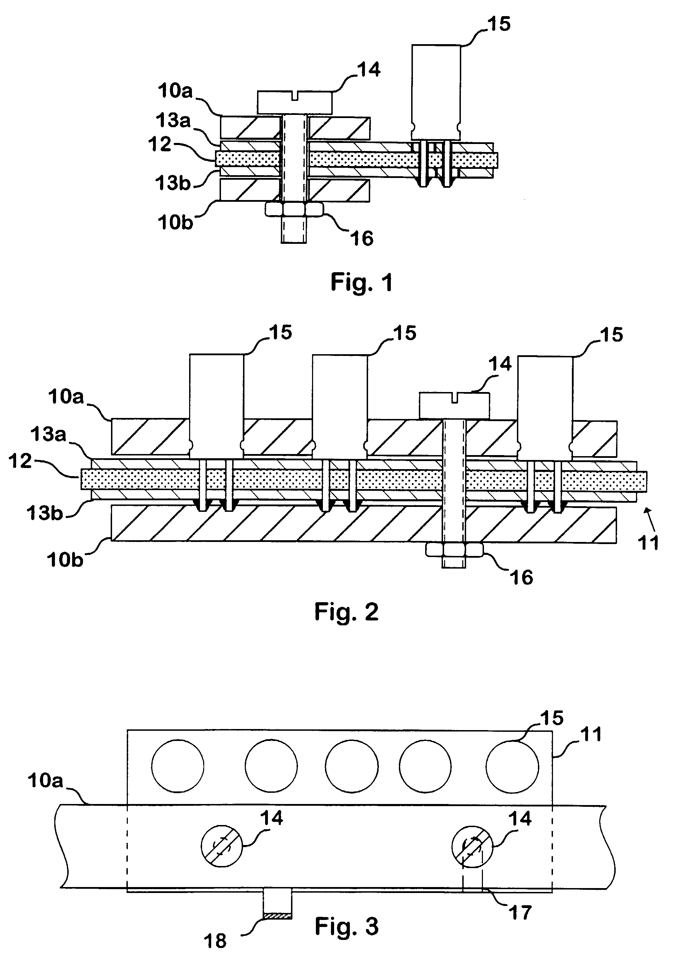

In Fig. 1 sind zwei Stromschienen 10a, 10b dargestellt, die unterschiedliches Potential führen. Die Stromschienen sind durch eine Befestigung miteinander verbunden, die in der Zeichnung symbolisch durch eine Schraube 14 und Mutter 16 dargestellt ist. Diese Befestigung ist selbstverständlich isoliert auszuführen.

Die Stromschienen sind elektrisch durch eine Leiterplatte 11 getrennt, die in bekannter doppelseitiger Ausführung aus einer isolierenden Trägerschicht 12 sowie zwei auf den Oberflächen aufgebrachten leitenden Schichten, üblicherweise aus Kupfer mit einer Oberflächenveredelung, ausgeführt ist.

Die Leiterplatte 11 ist einseitig breiter als die Stromschienen und erstreckt sich damit quer zur Hauptrichtung der Stromschinen über diese hinaus. Auf dieser überstehenden Fläche sind Siebkondensatoren 15 in bekannter Art befestigt, hier als Becherkondensatoren dargestellt, deren einer Pol mit der leitenden Schicht 13a und deren anderer Pol mit der leitenden Schicht 13b verbunden ist, üblicherweise durch Lötung. Von diesen ist ein größere Anzahl längs der Stromschiene vorhanden, wie in Fig. 3 symbolisiert. Nach der Länge der Stromschiene richtet sich die Anzahl der Kondensatoren, deren Kapazität dann der entsprechende Bruchteil der insgesamt benötigten Kapazität ist.

Für die Befestigungen 14, sind Löcher in den Leiterplatten 11 vorgesehen (in den Fig. nicht betont dargestellt). Dies Löcher können als Langlöcher 17 (in Fig. 3 nur einmal gezeichnet) ausgebildet werden, die bis zum Rand der Leiterplatte reichen, so daß die Leiterplatte mit den Kondensatoren nach Lösen der Verbindungen an der die Kondensatoren tragenden Seite herausgezogen werden und durch ein anderes Exemplar ersetzt werden kann. Dieses vereinfacht die Demontage und erlaubt eine einfache Reparatur nach Auslieferung.

An die Stromschienen können Anschlußpunkte 18 angeformt sein. Diese werden entweder mit Direktsteckern kontaktiert oder, mit Löchern versehen, direkt beispielsweise an eine Rückwand geschraubt. Dabei kann das Stromschienenpaket quer über die Rückwand laufen und an mehreren Stellen eine gepufferte Gleichspannung bereitstellen, ohne daß Platz für die Pufferkondensatoren auf der Rückwand benötigt wird. Die Fig. 3 zeigt einen solchen Anschluß 18 zwecks besserer Übersicht nur einmal für die obere Stromschiene; für die untere, nicht sichtbare, Stromschiene gilt entsprechendes.

Nicht in den Figuren gezeigt ist die Erweiterung auf mehr als zwei Stromschienen, bei der abwechselnd eine Stromschienen und eine Leiterplatte aufeinandergelegt sind. Dabei liegt dann zweckmäßig eine Stromschiene für Masse in der Mitte. Die untere Leiterplatte wird dann breiter ausgebildet, so daß die Kondensatoren nicht durch die obere Leiterplatte behindert werden.

## Patentansprüche

1. Anordnung von Stromschienen (10a, 10b) mit Siebkondensatoren (15) für eine über die Stromschienen (10a, 10b) geführte Spannung, mit den Merkmalen:
- die Stromschienen (10a, 10b) verlaufen parallel und sind durch Befestigungen (14, 16) mechanisch miteinander verbunden,
- zwischen zwei Stromschienen (10a, 10b) unterschiedlicher Polarität ist eine die Stromschienen (10a, 10b) isolierende Trägerplatte (11) befestigt,
- die Trägerplatte (11) ist auf beiden Oberflächen mit jeweils einer elektisch leitfähigen Schicht (13a, 13b) versehen,
- die leitfähigen Schichten (13a, 13b) werden durch die Befestigungen (14, 16) an die Stromschienen (10a, 10b) gepresst und dadurch mit diesen elektisch verbunden,
- auf einem die Stromschienen (10a, 10b) in Querrichtung überragenden Teil der Trägerplatte (11) sind Siebkondensatoren (15) angeordnet,
- die Pole der Siebkondensatoren (15) sind mit je einer der beiden leitfähigen Schichten (13a, 13b) verbunden.

2. Anordnung nach Anspruch 1, wobei längs der Stromschienen (10a, 10b) Anschlußelemente (18) vorhanden sind, an die Verbraucher anschließbar sind.

3. Anordnung nach Anspruch 1 oder 2, wobei die Stromschienen mittels durch Löcher in den Stromschienen und der Trägerplatte geführte Befestigungsmittel (14, 16) miteinander befestigt sind und die Löcher in der Trägerplatte als bis zum Rand geführte und dort geöffnete Langlöcher (17) ausgebildet sind.

## Claims

1. Arrangement of busbars (10a, 10b) with filter capacitors (15) for a voltage passed via the busbars (10a, 10b), having the features:
- the busbars (10a, 10b) run parallel and are mechanically connected to one another by fastenings (14, 16),
- a support board (11) which isolates the busbars (10a, 10b) is fastened between two busbars (10a, 10b) of different polarity,
- the support board (11) is provided with an electrically conductive layer (13a, 13b) on each of its two surfaces,
- the conductive layers (13a, 13b) are pressed against the busbars (10a, 10b) by the fastenings (14, 16) and thereby electrically connected to said busbars,
- filter capacitors (15) are arranged on a part of the support board (11) which projects beyond the busbars (10a, 10b) in the transverse direction,
- the poles of the filter capacitors (15) are each connected to one of the two conductive layers (13a, 13b).

2. Arrangement according to Claim 1, connection elements (18) to which loads can be connected being present along the busbars (10a, 10b).

3. Arrangement according to Claim 1 or 2, the busbars being fastened to one another by means of fastening means (14, 16) guided through holes in the busbars and in the support board, and the holes in the support board being designed as elongated holes (17) which are guided to the edge and opened there.

## Revendications

1. Dispositif de barres (10a,10b) omnibus à condensateurs (15) de filtrage pour une tension appliquée par l'intermédiaire des barres (10a,10b) omnibus, comportant les caractéristiques :
- les barres (10a, 10b) omnibus s'étendent parallèlement et sont reliées mécaniquement entre elles par des fixations (14,16)
- il est fixé une plaque (11) de support isolant les barres (10a, 10b) omnibus entre deux barres (10a, 10b) omnibus de polarité différente,
la plaque (11) de support est munie des deux côtés d'une couche (13a, 13b) conductrice de l'électricité,
- les couches (13a, 13b) conductrices sont pressées par les fixations (14,16) sur les barres (10a,10b) omnibus et leurs sont ainsi reliées électriquement,
- des condensateurs (15) de filtrage sont montés sur une partie de la plaque (11) de support faisant saillie des barres (10a, 10b) omnibus dans la direction transversale,
- les pôles des condensateurs (15) de filtrage sont reliés chacun à l'une des deux couches (13a, 13b) conductrices.

2. Dispositif suivant la revendication 1, dans lequel des éléments (18) de raccordement, auxquels les appareils utilisateurs peuvent être raccordés, sont présents le long des barres (10a, 10b) omnibus.

3. Dispositif suivant la revendication 1 ou 2, dans lequel les barres omnibus sont fixées les unes aux autres au moyen (14,16) de fixations guidées par des trous ménagés dans les barres omnibus et dans la plaque de support et les trous ménagés dans la plaque de support sont réalisés en trous (17) oblongs allant jusqu'au bord et ouvert au bord.
